# EUROPÄISCHE PATENTSCHRIFT

(11) **EP 2 549 267 B1**
(45) Veröffentlichungstag und Bekanntmachung des Hinweises auf die Patenterteilung: **29.01.2014**
(21) Anmeldenummer: 12176551.5
(22) Anmeldetag: 16.07.2012
(51) Int. Cl.: G01N 25/20, B01L 3/04, B65D 43/00

(54) **Probengefäss für kalorimetrische Messungen**
Sample container for calorimetric measurements
Récipient d'échantillon pour mesures calorimétriques

(30) Priorität: 21.07.2011 CH 12292011
(43) Veröffentlichungstag der Anmeldung: 23.01.2013
(73) Patentinhaber: SWISSI Process Safety GmbH, 4058 Basel (CH)
(72) Erfinder: Stocks, Volker, 79400 Kandern (DE)
(74) Vertreter: Clerc, Natalia

(56) Entgegenhaltungen:
- EP-A2- 0 226 906
- EP-A2- 0 672 590
- GB-A- 191 017 555
- JP-A- 10 086 957
- JP-A- 2001 004 571

## Beschreibung

### TECHNISCHES GEBIET

Die vorliegende Erfindung betrifft Hochdrucktiegel für kalorimetrische und thermoanalytische Messungen gemäss Oberbegriff des Patentanspruchs 1 sowie eine Vorrichtung und ein Verfahren zum Verschliessen von derartigen Probengefässen gemäss den Patentansprüchen 11 und 15.

### STAND DER TECHNIK

Die Thermoanalyse und die Mikrokalorimetrie werden insbesondere in der Forschung, in der Qualitätskontrolle und für die Abklärung der thermischen Sicherheit von chemischen Produktionsverfahren eingesetzt. Mit thermoanalytischen und kalorimetrischen Messmethoden, wie beispielsweise der differenziellen Scanning-Kalorimetrie, lässt sich erkennen, bei welcher Temperatur sich eine Probe umwandelt oder reagiert und wie gross die dazu erforderliche Wärmemenge ist, beziehungsweise wie viel Wärme freigesetzt wird. Bei der Abklärung der thermischen Sicherheit werden Edukte, Produkte und Reaktionsmischungen in verschiedenen Stadien der Reaktion mittels Mikrokalorimetrie untersucht, um das thermische Risiko des Produktionsverfahrens quantitativ bemessen zu können.

Um eine derartige kalorimetrische Messung durchzuführen, wird eine Probe in ein Probengefäss gegeben und bevorzugt druckdicht verschlossen. Das Probengefäss wird mit der Probe einem Temperaturprogramm unterworfen, und das thermische Verhalten wird beobachtet. Das Probengefäss muss in gewissen Fällen einem hohen Druck standhalten können und ist dann als ein Hochdrucktiegel ausgebildet. Zudem sollte es eine möglichst geringe Masse aufweisen, um eine möglichst grosse Messempfindlichkeit zu gewährleisten. Eine zu grosse Masse des Probengefässes beeinträchtigt die Messung, indem sie durch ihr träges Temperaturverhalten die Erfassung von schnellen Phänomenen verunmöglicht und zudem die Heizgeschwindigkeit und somit die Anzahl der pro Zeit durchgeführten Messungen begrenzt.

Auf dem Gebiet der thermischen Sicherheit hat sich ein Einweg-Probengefäss aus vergoldetem Stahl bewährt, welches einem Druck von bis zu 200 bar standhält. Dieses Probengefäss besteht aus einem einen Hohlraum aufweisenden Aufnahmegefäss, welches mit einem ebenfalls aus vergoldetem Stahl gefertigten Deckel verschliessbar ist. Der Verschluss erfolgt durch Kaltverschweissen des Probengefässes, indem der Deckel in eine Fassung des Aufnahmegefässes des Probengefässes gepresst wird. Dieses Probengefäss besitzt bei einem Probevolumen von ca. 50 µl eine Masse von 1.5 g. Derartige Probengefässe sind beispielsweise in der CH 695 709 und der CH 696 370 offenbart.

Da es sich bei derartigen Probengefässen um ein Verbrauchsmaterial handelt, welches oft in grosser Stückzahl verwendet wird, ist eine möglichst günstige Herstellung dieser Probengefässe wünschenswert. Der Preis eines Probengefässes wird dabei wesentlich durch das verwendete Material beeinflusst. Kostengünstige Materialien, welche sich zur Herstellung von Probengefässen für die Kalorimetrie eignen, sind beispielsweise Aluminium oder Titan. Der Nachteil von Aluminium und Titan ist jedoch, dass es sich im Vergleich zum elastischeren Stahl um verhältnismässig weiche und plastische Materialien handelt, welche sich nur begrenzt für das Kaltverschweissen eignen.

In der JP 2003/028820 ist ein Probengefäss für die thermische Analyse offenbart, bei dem das Gefäss zur Aufnahme einer Probe dadurch druckdicht verschlossen wird, dass der äussere Rand eines Deckels um einen seitlich nach aussen hin vorstehenden Randbereich des Gefässes herumgebogen wird. In der JP 04-69561, der JP 09-178683 und der JP 09-33463 sind jeweils Tiegel gezeigt, bei denen zum Verschliessen nicht der Deckel, sondern der obere Rand des Behälters verformt wird.

Weitere Probengefässe, welche für die thermische Analyse von Proben geeignet sind, sind aus den Dokumenten US 4,303,615 und JP 2001-004571 bekannt.

### DARSTELLUNG DER ERFINDUNG

Es ist also eine Aufgabe der vorliegenden Erfindung, ein Probengefäss für kalorimetrische Messungen anzugeben, welches auf eine einfache Art und Weise derart verschliessbar ist, dass es auch dann einem hohen Druck standhält, wenn es aus einem verhältnismässig plastischen Material hergestellt ist. Zur Lösung dieser Aufgabe wird ein Probengefäss vorgeschlagen, wie es in Anspruch 1 angegeben ist. Ausserdem werden in den Ansprüchen 11 und 15 eine Vorrichtung sowie ein entsprechendes Verfahren zum Verschliessen eines derartigen Probengefässes angegeben. Vorteilhafte Ausgestaltungen der Erfindung sind in den abhängigen Ansprüchen angegeben.

Die vorliegende Erfindung stellt also einen Hochdruck-Tiegel für kalorimetrische Messungen zu Verfügung, aufweisend
ein Aufnahmegefäss, welches einen Boden aufweist, eine bevorzugt zylindrische Seitenwand, die sich umlaufend vom Boden aus entlang einer Längsachse bis zu einer Oberkante hin erstreckt, sowie einen durch die Seitenwand und den Boden begrenzten Innenraum, der zur Aufnahme einer Probe dient; sowie
einen Deckel mit einer Deckfläche, der dazu ausgebildet ist, den Innenraum in einem verschlossenen Zustand des Probengefässes luftdicht nach aussen hin zu verschliessen.
Der Deckel weist dabei einen Randbereich auf, der im Querschnitt U-förmig ausgebildet ist und dadurch einen Aufnahmeraum für eine Aufnahme der Oberkante des Aufnahmegefässes bildet, und dass die Deckfläche im verschlossenen Zustand des Probengefässes innerhalb des Innenraums des Aufnahmegefässes angeordnet ist.

Dadurch, dass der Deckel einen im Querschnitt U-förmig ausgebildeten Randbereich mit einem Aufnahmeraum für die Oberkante des Aufnahmegefässes aufweist, ist es möglich, das Probengefäss, selbst wenn es aus einem verhältnismässig plastischen Material wie zum Beispiel Aluminium, Titan bzw. einer Aluminium- oder Titanlegierung hergestellt ist, einfach und druckfest zu verschliessen. Beim Verschliessen kann die Oberkante des Aufnahmegefässes im U-förmigen Randbereich eingeklemmt bzw. eingepresst werden, wodurch eine Dichtfläche zwischen dem Deckel und dem Aufnahmegefäss entsteht, die sich bevorzugt über die gesamte Innenfläche des Aufnahmeraums bzw. im Bereich der Oberkante des Aufnahmegefässes sowohl über die Innen- als auch die Aussenseite der Seitenwand des Aufnahmegefässes erstreckt. Durch das Ausbilden einer derartigen, grossen Dichtfläche kann ein luftdichter Verschluss des Probengefässes hergestellt werden, der auch einem grossen Druck von insbesondere bis zu 50 bar oder mehr standhält.

Orts- und Richtungsangaben wie oben, unten, nach oben und nach unten beziehen sich im Folgenden jeweils auf ein Probengefäss, bei welchem der Deckel bestimmungsgemäss auf das Aufnahmegefäss aufgesetzt ist, und bei welchem sich die Längsachse in die Schwerkraftsrichtung erstreckt, also der Boden des Aufnahmegefässes unten und der Deckel oben angeordnet ist. Ebenso beziehen sich diese Angaben in Bezug auf die Vorrichtung zum Verschliessen eines derartigen Probengefässes jeweils auf eine bestimmungsgemässe Situation, in welcher das Probengefäss mit dem Deckel oben und dem Boden des Aufnahmegefässes unten zwischen einem oberhalb des Deckels angeordneten Stempel und einer unterhalb des Aufnahmegefässes angeordneten Matrize platziert ist. Angaben wie innen, aussen, nach innen oder nach aussen sind jeweils in Bezug auf den Innenraum des Aufnahmegefässes zu verstehen.

Bevorzugt liegt der Deckel in einem Zustand, in dem er bestimmungsgemäss auf das Aufnahmegefäss aufgesetzt ist, dieses aber noch nicht luftdicht verschliesst, mit seinem im Querschnitt U-förmigen Randbereich sowohl auf der Innen- als auch auf der Aussenseite an der Seitenwand des Aufnahmegefässes an. Vorteilhaft erstreckt sich der U-förmige Randbereich des Deckels dabei auf der Innen- und der Aussenseite der Seitenwand des Aufnahmegefässes jeweils im Wesentlichen gleich weit nach unten hin.

Die Seitenwand des Aufnahmegefässes weist bevorzugt eine hohlzylindrische Form auf. Vorzugsweise entspricht zudem die Höhe des Aufnahmegefässes im Wesentlichen dem Aussendurchmesser der Seitenwand des Aufnahmegefässes. Ausserdem bevorzugt ist das Verhältnis der Wanddicken des Bodens und der Seitenwand des Aufnahmegefässes im Bereich 1:1 bis 2:1, insbesondere bevorzugt 1:1.

Bevorzugt ist der U-förmige Randbereich des Deckels umlaufend ausgebildet. Ein optimaler luftdichter Verschluss ist dadurch entlang des gesamten Umfangs des Deckels gegeben. Insbesondere bevorzugt sind sowohl das Aufnahmegefäss als auch der Deckel jeweils rotationssymmetrisch ausgebildet, wobei die Symmetrieachse der Längsachse des Probengefässes entspricht.

Der Aufnahmeraum kann auch als eine Nut angesehen werden, die bevorzugt umlaufend ausgebildet ist. Bevorzugt ist der Aufnahmeraum bzw. die Nut in eine im Wesentlichen parallel zur Längsachse weisende Richtung und insbesondere nach unten hin offen ausgebildet.

In einer insbesondere bevorzugten Ausführungsform ist der im Querschnitt U-förmige Randbereich des Deckels dadurch ausgebildet, dass der Deckel eine sich im Wesentlichen senkrecht von der Deckfläche nach oben hin erstreckende Seitenwand, eine sich von dieser Seitenwand des Deckels im Wesentlichen senkrecht nach aussen hin erstreckende Auflagefläche, sowie einen sich von dieser Auflagefläche im Wesentlichen senkrecht nach unten hin erstreckenden Mantel aufweist. Bevorzugt erstrecken sich dabei sowohl die Seitenwand des Deckels als auch der Mantel jeweils im Wesentlichen parallel zur Seitenwand des Aufnahmegefässes, wenn der Deckel auf das Aufnahmegefäss aufgesetzt ist, dieses aber noch nicht luftdicht verschliesst. Die Oberseite des Deckels, also die im verschlossenen Zustand des Probengefässes dem Innenraum gegenüberliegend angeordnete Seite des Deckels, weist dann in der Regel eine Vertiefung auf, welche bevorzugt zentral angeordnet und zylinderförmig ausgestaltet ist. Vorzugsweise weist diese im Querschnitt bevorzugt rechteckig ausgebildete Vertiefung einen Boden auf, welcher planparallel zur Deckfläche des Deckels angeordnet ist.

Bevorzugt erstreckt sich der Mantel in Richtung der Längsachse im Wesentlichen bis zur Deckfläche nach unten hin. Ein luftdichtes Verschliessen des Probengefässes kann dann insbesondere dadurch erfolgen, dass die Seitenwand des Aufnahmegefässes zwischen dem Mantel und der Seitenwand des Deckels eingepresst wird. Im Vergleich zur Dicke bzw. Wandstärke der Seitenwand des Deckels weist der Mantel bevorzugt eine weniger grosse Dicke, insbesondere bevorzugt eine nur etwa halb so grosse Dicke, auf.

Bevorzugt weist das Aufnahmegefäss im Bereich der Oberkante einen umlaufenden, nach aussen hin vorstehenden Wulst auf. Durch das Vorsehen eines solchen Wulstes kann die luftdichte und insbesondere druckfeste Verbindung zwischen Deckel und Aufnahmegefäss weiter verbessert werden.

Vorteilhaft ist der Aufnahmeraum des Deckels derart ausgebildet, dass er im verschlossenen Zustand des Probengefässes den Wulst im Bereich der Oberkante des Aufnahmegefässes vollständig aufnimmt, und dass sich der Deckel dabei auf der Aussenseite des Wulstes entlang der Längsachse in Richtung des Bodens des Aufnahmegefässes über den Wulst hinaus erstreckt. Der Deckel kann dann im luftdicht verschlossenen Zustand des Probengefässes den Wulst insbesondere derart hintergreifen, dass dadurch die Verbindung des Deckels am Aufnahmegefäss insbesondere im Hinblick auf einen hohen Druck im Innenraum des Aufnahmegefässes verbessert ist.

Der Wulst weist vorteilhaft eine Unterseite auf, welche sich umlaufend von der Seitenwand des Aufnahmegefässes entlang einer Richtung nach aussen hin erstreckt, die relativ zu einer senkrecht auf der Längsachse stehenden Richtung geneigt ist. Bevorzugt ist diese Unterseite des Wulstes dabei in einem Winkel von 45 ° relativ zur Aussenfläche der Seitenwand des Aufnahmegefässes geneigt. Aufgrund dieser Neigung der Wulstunterseite ist es möglich, den Deckel derart auf das Aufnahmegefäss aufzupressen, dass er insbesondere im gesamten aussenseitigen Bereich des Wulstes eng an diesem anliegt und dadurch eine luftdichte und insbesondere druckfeste Verbindung mit dem Aufnahmegefäss herstellt.

Vorteilhaft weist die Seitenwand des Aufnahmegefässes eine zum Innenraum hin weisende Innenfläche auf, die vollständig plan und insbesondere vorteilhaft glatt ausgebildet ist. Damit ist gemeint, dass die Innenfläche vorteilhaft keine Absätze, Vorsprünge, Rillen oder ähnliche Strukturen aufweist. Dabei ist die Innenfläche vorteilhaft insbesondere im Bereich der Oberkante der Seitenwand, also in demjenigen Bereich, der zur Verbindung mit dem Deckel dient, plan ausgebildet. Die Befüllbarkeit des Aufnahmegefässes mit einer Probe ist dadurch erleichtert. Wenn die Probe beispielsweise ein fliessfähiges und insbesondere pulverförmiges Material ist, besteht keine Gefahr, dass beim Einfüllen ein Teil der Probe auf einer Oberfläche oder einer Struktur oberhalb des Bodens des Aufnahmegefässes liegen bleibt.

Vorzugsweise ist das Aufnahmegefäss aus Aluminium oder Titan hergestellt. Bevorzugt ist zudem auch der Deckel aus Aluminium oder Titan hergestellt. Dabei kann es sich auch um eine Aluminium- oder Titanlegierung handeln. Eine Herstellung aus Aluminium oder Titan ist insbesondere sehr kostengünstig, was einen erheblichen Vorteil darstellt, da es sich beim Probengefäss üblicherweise um einen Verbrauchsartikel handelt. Denkbar ist aber selbstverständlich auch eine Herstellung des Aufnahmegefässes und des Deckels aus Stahl oder aus einem anderen Material.

Erfindungsgemäss wird ausserdem eine Vorrichtung zum Verschliessen eines derartigen Probengefässes für kalorimetrische Messungen angegeben, welches ein Aufnahmegefäss mit einem Innenraum zur Aufnahme einer Probe sowie einen Deckel zum luftdichten Verschliessen dieses Innenraums aufweist, die Vorrichtung aufweisend
einen Stempel mit einer Anschlagsfläche zum Aufpressen des Deckels entlang einer Aufpressrichtung auf das Aufnahmegefäss, um den Innenraum des Aufnahmegefässes luftdicht nach aussen hin zu verschliessen;
eine Matrize mit einer über eine Eingangsöffnung zugänglichen Vertiefung, um das Aufnahmegefäss für das Aufpressen des Deckels darin aufzunehmen.
Dabei weist die Matrize eine relativ zur Aufpressrichtung abgeschrägte Kante auf, welche die Eingangsöffnung der Vertiefung seitlich bevorzugt umlaufend begrenzt, um einen in Bezug auf das Aufnahmegefäss aussenseitig angeordneten Bereich des Deckels beim Aufpressen nach innen zum Aufnahmegefäss hin zu drücken.

Die abgeschrägte Kante lenkt beim Aufpressen also eine in Aufpressrichtung gerichtete Kraft in eine bevorzugt senkrecht, nach innen zum Aufnahmegefäss hin gerichtete Kraft um. Ein in Bezug auf das Aufnahmegefäss aussenseitig angeordneter Bereich des Deckels wird dadurch radial nach innen, zum Aufnahmegefäss hin gedrückt, wodurch eine luftdichte Verbindung zwischen Deckel und Aufnahmegefäss entsteht.

Vorteilhaft weist die abgeschrägte Kante einen Winkel von ungefähr 45° relativ zur Aufpressrichtung auf. Die Kraft wird dann optimal umgelenkt.

Die in der Matrize ausgebildete Vertiefung kann optional auch als eine durchgehende, nach unten hin offene Öffnung der Matrize ausgebildet sein. Vorzugsweise weist die Vertiefung einen entfernbaren Boden auf. Mittels Entfernen des Bodens kann die Vertiefung dann tiefer oder sogar ganz durchgehend gemacht werden. Bevorzugt ist weist die Vertiefung eine Seitenwand mit einem Innenradius auf, welcher geringfügig grösser als der Aussenradius des Aufnahmegefässes ist.

Der Stempel weist bevorzugt einen Kern auf, welcher gegenüber der Anschlagsfläche in Richtung zur Matrize nach aussen hin vorragt, um eine an die Aussenseite des Deckels angepasste Aussenform des Stempels auszubilden. Der Stempel weist somit also bevorzugt eine zur Oberseite des Deckels komplementäre Unterseite auf, die insbesondere in Bezug zur Oberseite des Deckels passgenau ausgebildet ist. Falls die Oberseite des Deckels eine Vertiefung aufweist, ist der Stempel vorteilhaft derart ausgebildet, dass er diese Vertiefung vollständig ausfüllt. Eine derartige Ausbildung des Stempels verhindert insbesondere das Entstehen von unerwünschten Deformierungen des Deckels beim Aufpressen des Deckels auf das Aufnahmegefäss.

Vorzugsweise ist der nach aussen hin vorragende Kern umlaufend von der Anschlagsfläche umgeben. Der Kern kann dann von einem Mantel umgeben sein, dessen Unterseite die Anschlagsfläche bildet. Bevorzugt weist dieser Mantel eine Befestigungsöffnung auf, in welche eine Schraube einschraubbar ist, um den Kern zu fixieren. Vorteilhaft ist mit Hilfe dieser Schraube insbesondere das Vorragen des Kerns gegenüber der Anschlagfläche an den Deckel des Probengefässes anpassbar.

Es wird zudem ein erfindungsgemässes Verfahren zum Verschliessen eines Probengefässes für kalorimetrische Messungen angegeben, welches wie bereits beschrieben ausgebildet ist, und welches also ein Aufnahmegefäss mit einem Innenraum zur Aufnahme einer Probe sowie einen Deckel zum luftdichten Verschliessen dieses Innenraums aufweist. Das Verfahren weist dabei die folgenden Verfahrensschritte auf:
- Bereitstellen einer Vorrichtung zum Verschliessen eines Probengefässes, wie sie bereits angegeben wurde, aufweisend einen Stempel und eine Matrize mit einer Vertiefung und einer abgeschrägten Kante;
- Platzieren des Aufnahmegefässes in der Vertiefung der Matrize;
- Platzieren des Deckels zwischen dem Aufnahmegefäss und dem Stempel; sowie
- Aufpressen des Deckels auf das Aufnahmegefäss mittels Annäherung des Stempels und der Matrize relativ zueinander, wobei die abgeschrägte Kante der Matrize beim Aufpressen einen in Bezug auf das Aufnahmegefäss aussenseitig angeordneten Bereich des Deckels nach innen gegen das Aufnahmegefäss drückt.

Bei einer Matrize, welche eine Vertiefung mit einem entfernbaren Boden aufweist, wird vor dem Aufpressen des Deckels auf das Aufnahmegefäss bevorzugt zuerst der Deckel auf das Aufnahmegefäss aufgesetzt und dann vor dem Aufpressen des Deckels der Boden aus der Matrize entfernt.

Bevorzugt wird zudem zuerst der Kern des Stempels in die Vertiefung des Deckels eingeführt, so dass er diese vollständig ausfüllt, und dann die Anschlagsfläche des Stempelmantels auf die Oberseite des Deckels abgesenkt.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine zentrale Schnittansicht durch einen Stempel, ein Probengefäss und eine Matrize gemäss einer erfindungsgemässen Ausführungsform, vor dem Verschliessen des Probengefässes;
- Fig. 2: eine Detailansicht des in der Fig. 1 markierten Bereiches;
- Fig. 3: eine zentrale Schnittansicht durch den Stempel, das Probengefäss und die Matrize der Fig. 1, unmittelbar vor dem luftdichten Verschliessen des Probengefässes;
- Fig. 4: eine Detailansicht des in der Fig. 3 markierten Bereiches;
- Fig. 5: eine zentrale Schnittansicht durch den Stempel, das Probengefäss und die Matrize der Fig. 1, im luftdicht verschlossenen Zustand des Probengefässes; sowie
- Fig. 6: eine Detailansicht des in der Fig. 5 markierten Bereiches.

### BESCHREIBUNG BEVORZUGTER AUSFÜHRUNGSFORMEN

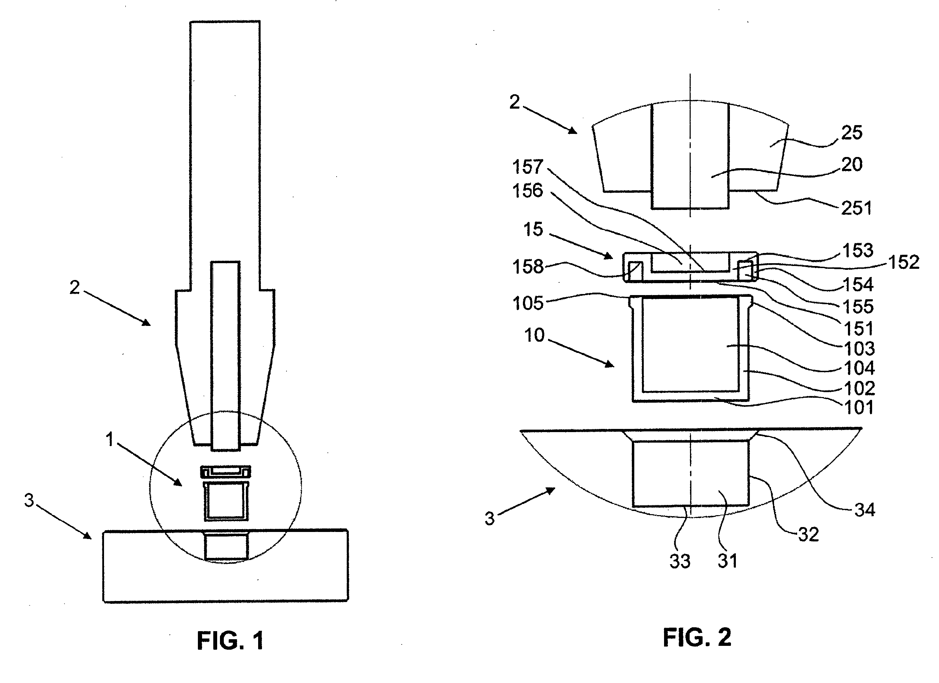

In den Figuren 1 bis 6 ist eine Ausführungsform eines erfindungsgemässen Probengefässes in Form eines Tiegels 1 während dem Verschliessvorgang in einer erfindungsgemässen Verschliessvorrichtung gezeigt. Beim Probengefäss handelt es sich um einen Hochdrucktiegel, welcher zur Aufnahme einer in einer kalorimetrischen Analyse zu untersuchenden Probe geeignet ist. Der Tiegel 1 weist ein Aufnahmegefäss 10 auf, welches mit einem darauf aufsetzbaren Deckel 15 nach aussen hin verschliessbar ist. Zum luftdichten Verschliessen des Tiegels 1 ist eine Verschliessvorrichtung vorgesehen, die einen Stempel 2 sowie, als Gegenstück, eine Matrize 3 umfasst.

Das Aufnahmegefäss 10 des Tiegels 1 weist einen Boden 101 auf, welcher in der vorliegenden Ausführungsform kreisrund und plan ausgestaltet ist, sowie eine Seitenwand 102, welche sich senkrecht und umlaufend vom Boden 101 bis zu einer Oberkante nach oben hin erstreckt. Die Seitenwand 102 weist somit eine im Wesentlichen hohlzylindrische Form auf, welche eine Längsachse des Tiegels 1 definiert. Der Boden 101 und die Seitenwand 102 begrenzen gemeinsam einen Innenraum 104 des Tiegels 1, welcher zur Aufnahme der zu untersuchenden Probe dient. Die Wanddicke des Bodens 101 entspricht bevorzugt dem 1- bis 2-fachen derjenigen der Seitenwand 102.

Vorteilhaft sind die gesamte Innenfläche der Seitenwand 102 und bevorzugt auch die gesamte Oberseite des Bodens 101 jeweils plan ausgebildet, um das Befüllen des Tiegels zu erleichtern. Ein zu untersuchendes pulverförmiges Material kann dann beim Einfüllen beispielsweise nicht auf einem Absatz oder in einer Rille im Innern des Aufnahmegefässes liegenbleiben, sondern gelangt direkt in den dazu vorgesehenen, unteren Bereich des Innenraums 104 des Aufnahmegefässes 10. In einem zentralen Querschnitt betrachtet beschreibt das Aufnahmegefäss 10 bevorzugt eine im Wesentlichen quadratische Form.

Um die druckfeste Verbindung zwischen dem Deckel 15 und dem Aufnahmegefäss 10 zu verbessern, weist das Aufnahmegefäss 10 im Bereich der Oberkante der Seitenwand 102 bevorzugt einen umlaufenden, nach aussen hin vorstehenden Wulst 103 auf. Dieser Wulst 103 weist im vorliegenden Ausführungsbeispiel eine mit der Oberkante der Seitenwand 102 bündige Oberseite auf, sowie eine Unterseite, die sich umlaufend in einem Winkel von ungefähr 45° von der Seitenwand 102 relativ zur Längsachse nach aussen hin erstreckt. Zwischen der Oberseite und der Unterseite erstreckt sich eine radiale Aussenseite des Wulstes 103 in eine zur Längsachse parallele Richtung.

Im vorliegenden Ausführungsbeispiel wurde für das Aufnahmegefäss 10 eine sich entlang der Längsachse erstreckende Höhe von 5.5 mm gewählt. Der Aussendurchmesser der Seitenwand 102 beträgt 6.0 mm. Die Wanddicke des Bodens 101 beträgt 0.5 - 1.0 mm und die der Seitenwand 102 0.5 mm. Im Bereich des Wulstes 103 beträgt der Aussendurchmesser des Aufnahmegefässes 10 6.4 mm.

Der Deckel 15 weist eine Deckfläche 151 auf, welche in einem verschlossenen Zustand des Tiegels 1 im Innern des Innenraums 104 angeordnet ist und sich dabei im Wesentlichen parallel zur Oberfläche des Bodens 101 erstreckt. Die Deckfläche 151 dient dabei dazu, im verschlossenen Zustand des Tiegels 1 den Raum, in welchem die zu untersuchende Probe aufgenommen ist, nach oben hin zu begrenzen. Die Deckfläche 151 stellt die Unterseite eines hier kreisrund und plan ausgebildeten Deckabschnitts dar. Im vorliegenden Fall ist der Tiegel 1 derart ausgebildet, dass sich in seinem verschlossenen Zustand auch die Oberseite dieses Deckabschnitts innerhalb des Innenraums 104 befindet.

Vom Deckabschnitt und somit auch von der Deckfläche 151 erstreckt sich eine umlaufende Seitenwand 152 des Deckels 15 senkrecht nach oben hin. Von der Oberkante dieser Seitenwand 152 aus erstreckt sich ein umlaufender Auflageabschnitt, dessen Unterseite eine Auflagefläche 153 bildet, senkrecht nach aussen hin. Weiter erstreckt sich ein umlaufender Mantel 154 vom äusseren Rand dieses Auflageabschnitts parallel zur Seitenwand 152 und somit zur Längsachse des Tiegels 1 nach unten hin. Der Mantel 154 erstreckt sich dabei im vorliegenden Ausführungsbeispiel bis auf die Höhe der Deckfläche 151 nach unten hin. Die Seitenwand 152, die Auflagefläche 153 und der Mantel 154 bilden somit gemeinsam einen im Querschnitt U-förmig ausgebildeten Randbereich des Deckels 15, welcher einen ringförmigen, nach unten hin offenen Aufnahmeraum 155 bildet. Dieser Aufnahmeraum 155 dient dazu, im verschlossenen Zustand des Tiegels 1 die Oberkante der Seitenwand 102 des Aufnahmegefässes 10 inklusive dem Wulst 103 in sich aufzunehmen, um einen luftdichten Verschluss des Aufnahmegefässes 10 zu ermöglichen. Dabei erstreckt sich der Mantel 154 des Deckels 15 bevorzugt über den Wulst 103 hinaus nach unten hin. Der Aufnahmeraum 155 stellt bevorzugt eine umlaufende Nut dar.

Bevorzugt ist die Dicke des Deckabschnitts 1-2 mal so gross wie die Dicke der Seitenwand 102 des Aufnahmegefässes 10. Ausserdem sind die Dicke der Seitenwand 152 des Deckels 15 und die Dicke des Auflageabschnitts jeweils gleich gross wie die Dicke der Seitenwand 102. Allerdings ist die Dicke des Mantels 154 bevorzugt weniger dick, insbesondere bevorzugt nur etwa halb so dick, wie die Dicke des Deckabschnitts. Mit der Dicke ist jeweils die Wandstärke gemeint.

Im vorliegenden Ausführungsbeispiel beträgt der Aussendurchmesser des Mantels 154 7.0 mm. Die Höhe des Mantels 154 beträgt 1.5 mm. Dabei weist der Mantel 154 eine Wanddicke von 0.3 mm auf. Die Wanddicken des Auflageabschnitts, des Deckabschnitts und der Seitenwand des Deckels 15 sind hier alle gleich gross und betragen jeweils 0.5 mm. Der Aufnahmeraum 155 ist im Querschnitt betrachtet rechteckig ausgebildet mit Massen von 0.7 mm x 1.0 mm.

Während die Unterseite des Deckels 15 somit im peripheren Randbereich eine umlaufende Vertiefung aufweist, weist die Oberseite des Deckels 15 eine zentrale, zylindrische Vertiefung 156 auf. Diese Vertiefung 156 ist durch die Innenfläche der Seitenwand 152 und die Oberseite des Deckabschnitts begrenzt. Die Oberseite des Deckabschnitts bildet somit einen hier planen Boden 157 der Vertiefung 156, welcher sich insbesondere planparallel zur Deckfläche 151 erstreckt. In einem zentralen Querschnitt betrachtet ist die Vertiefung 156 rechteckig ausgebildet und weist Masse von 4.1 mm x 0.5-1.0 mm auf. Das Vorhandensein dieser zentralen Vertiefung 156 auf der Oberseite des Deckels 15 ist nicht zwingend notwendig, bewirkt aber eine Materialersparnis, welche hinsichtlich der kalorimetrischen Analyse vorteilhaft ist.

Im vorliegenden Ausführungsbeispiel sind sowohl das Aufnahmegefäss 10 als auch der Deckel 15 des Tiegels 1 jeweils einstückig aus einer Aluminium- oder Titanlegierung hergestellt. Es ist jedoch auch eine Herstellung aus anderen Materialien denkbar. Sie weisen dabei jeweils vorteilhaft eine rotationssymmetrische Geometrie auf.

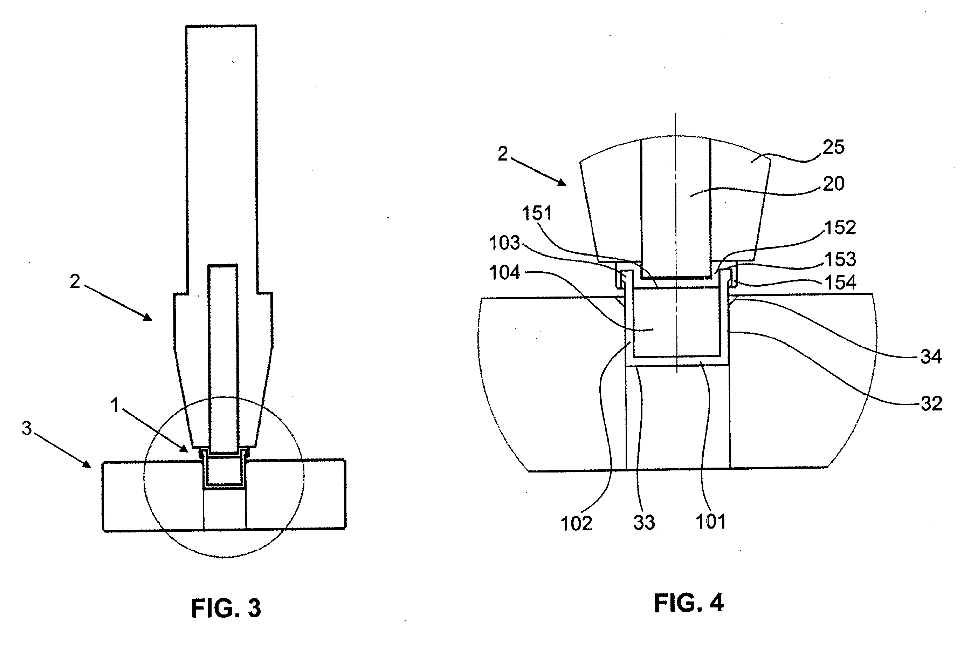

Der Zustand, in welchem der Deckel 15 bestimmungsgemäss auf das Aufnahmegefäss 10 aufgesetzt ist, dieses aber noch nicht luftdicht verschliesst, ist insbesondere in der Figur 4 gezeigt. In diesem Zustand liegt die Auflagefläche 153 umlaufend auf der Oberkante des Aufnahmegefässes auf. Die Seitenwand 152 des Deckels 15 erstreckt sich dabei ebenso wie der Mantel 154 parallel zur Innenfläche der Seitenwand 102 des Aufnahmegefässes 10. Die Seitenwand 152 des Deckels 15 liegt dabei bevorzugt an der Innenfläche der Seitenwand 102 des Aufnahmegefässes 10 an. Ebenso liegt dabei der Mantel 154 des Deckels 15 mit seiner Innenseite an der Aussenseite des Wulstes 103 des Aufnahmegefässes 10 an. Ein gewisses Spiel zwischen dem Deckel 15 und dem Aufnahmegefäss 10 kann dabei vor dem Aufpressen mittels der Verschliessvorrichtung aber durchaus noch vorhanden sein.

Der Stempel 2 und die Matrize 3 der Verschliessvorrichtung dienen dazu, den Deckel 15 entlang einer Aufpressrichtung auf das Aufnahmegefäss 10 aufzupressen, um eine luftdichte Verbindung zwischen dem Deckel 15 und dem Aufnahmegefäss 10 herzustellen. Dazu weist der Stempel 2 eine nach unten, zur Matrize 3 hin weisende Anschlagsfläche 251 auf, die dazu ausgebildet ist, einen umlaufenden Anschlag mit der Oberseite des Auflageabschnitts des Deckels 15 zu bilden. Die Anschlagsfläche 251 bildet dabei die Unterseite eines Mantels 25 des Stempels 2. Dieser Mantel 25 umgibt einen in Bezug auf die Anschlagsfläche 251 nach unten hin vorstehenden Kern 20. Der Kern 20 steht dabei gerade so viel gegenüber der Anschlagsfläche 251 nach unten hin vor, dass er die auf der Oberseite des Deckels 15 ausgebildete, zentrale Vertiefung 156 vollständig ausfüllt, wenn die Anschlagsfläche 251 einen Anschlag mit der Oberseite des Deckels 15 bildet (siehe Figur 4). Die Unterseite des Stempels 2 ist somit komplementär zur Oberseite des Deckels 15 ausgebildet.

Der Mantel 25 des Stempels 2 weist eine sich quer zur Aufpressrichtung erstreckende Befestigungsöffnung 252 auf. Diese Befestigungsöffnung 252 weist ein Innengewinde auf, in welches eine Schraube einschraubbar ist, um den Kern 20 im Mantel 25 zu fixieren. Mit Hilfe dieser Schraube ist das Vorragen des Kerns 20 gegenüber der Anschlagsfläche 251 auf einfache Art und Weise an die Vertiefung 156 des Deckels 15 anpassbar, indem der Kern 20 bei gelöster Schraube entsprechend in Aufpressrichtung relativ zum Mantel 25 verschoben wird.

Die Matrize 3 der Verschliessvorrichtung weist eine Vertiefung 31 auf, die im Wesentlichen komplementär zur Aussenseite des Aufnahmegefässes 10 ausgebildet ist. Die Vertiefung 31 wird durch eine im vorliegenden Ausführungsbeispiel zylindrische Innenwand 32 und einen planen kreisrunden Boden 33 sowie eine abgeschrägte Kante 34 begrenzt. Der in den Figuren 1 und 2 gezeigte Boden 33 verhindert, dass das leere Gefäss während der Befüllung bzw. während des Aufsetzens des Deckels nach unten rutscht. Er wird beim Verschliessen des Gefässes, wie es in den Figuren 3 bis 6 gezeigt ist, entfernt. Anstelle einer Matrize mit entfernbarem Boden können auch zwei Matrizen verwendet werden, wobei eine für das Befüllen und Aufsetzen des Deckels und die andere für das Verschliessen des Gefässes benutzt wird. Die abgeschrägte Kante 34, welche sich umlaufend vom oberen Ende der Innenwand 32 nach oben hin erstreckt, begrenzt seitlich eine Eingangsöffnung der Vertiefung 31. Durch diese Eingangsöffnung hindurch ist das Aufnahmegefäss 10 in die Vertiefung 31 einsetzbar. Die abgeschrägte Kante 34 ist in der vorliegenden Ausführungsform relativ zur Aufpressrichtung der Verschliessvorrichtung 2, 3 in einem Winkel von ungefähr 45° geneigt. Sie dient dazu, den Mantel 154 des Deckels 15 beim Aufpressen des Deckels 15 auf das Aufnahmegefäss 10 radial nach innen, also in eine im Wesentlichen senkrecht zur Aufpressrichtung weisende Richtung zu drücken.

Zum Einfüllen der Probe wird der Tiegel 1 in die Matrize 3 mit Boden 33 gestellt. Um den Tiegel 1 nach dem Einfüllen einer Probe in den Innenraum 104 des Aufnahmegefässes 10 luftdicht zu verschliessen, wird der Deckel 15 zuerst derart auf das Aufnahmegefäss 10 aufgesetzt, dass die Oberkante der Seitenwand 102 mit dem Wulst 103 vollständig im Aufnahmeraum 155 des Deckels 15 aufgenommen ist (Presssitz). Nun wird der Boden 33 aus der Matrize 3 entfernt (bzw. der Tiegel wird in eine Matrize ohne Boden gestellt) (Figuren 3 und 4). In diesem Zustand wird der Stempel 2 derart in die zentrale Vertiefung 156 des Deckels 15 eingeführt, dass der Kern 20 die nach oben hin offene, zentrale Vertiefung 156 des Deckels 15 vollständig ausfüllt. Die Anschlagsfläche 251 des Mantels 25 wird nun auf die Oberseite des Auflageabschnitts des Deckels 15 abgesenkt. Diese Situation ist in den Figuren 3 und 4 dargestellt.

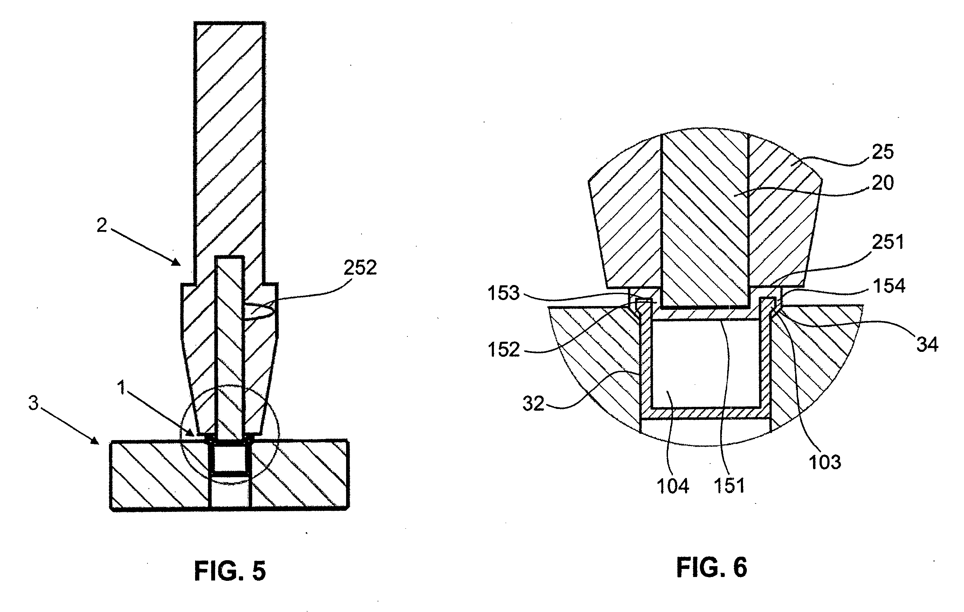

Um den Tiegel 1 nun luftdicht zu verschliessen, werden der Stempel 2 und die Matrize 3 weiter entlang der Aufpressrichtung über eine definierte Wegstrecke zueinander hin bewegt. Dabei wird der untere Bereich des Mantels 154 des Deckels 15 von der abgeschrägten Kante 34 radial nach innen gegen die Seitenwand 102 und die Unterseite des Wulstes 103 hin gedrückt (siehe Figuren 5 und 6). Der sich in die obere zentrale Vertiefung 156 des Deckels 15 hinein erstreckende Kern 20 des Stempels 2 verhindert dabei, dass sich der innerhalb der Seitenwand 102 des Aufnahmegefässes 10 angeordnete Bereich des Deckels 15 in einer unerwünschten Weise verformt.

Der derart auf das Aufnahmegefäss 10 aufgepresste Deckel 15 weist entlang der gesamten Innenfläche des Aufnahmeraums 155 eine Dichtfläche 105 mit dem Aufnahmegefäss 10 auf. Diese Dichtfläche 105 wird beim Aufpressvorgang an eine entsprechende Dichtfläche 158 des Aufnahmegefässes 10 angepresst, so dass ein luftdichter und insbesondere druckdichter Verschluss des Aufnahmegefässes 10 entsteht. Die Dichtfläche 105 des Deckels 15 umfasst dabei die Aussenseite der Seitenwand 152, die Auflagefläche 153 sowie die Innenseite des Mantels 154. Die Dichtfläche 158 des Aufnahmegefässes 10 umfasst einen oberen Bereich der Innenseite der Seitenwand 102, die Oberkante der Seitenwand 102, den Wulst 103 sowie einen schmalen Bereich der Aussenseite der Seitenwand 102, welcher unmittelbar unterhalb des Wulstes 103 angeordnet ist.

Selbstverständlich ist die hier beschriebene Erfindung nicht auf die erwähnte Ausführungsform beschränkt und eine Vielzahl von Abwandlungen ist möglich. So muss beispielsweise der Wulst 103 nicht zwingend am Aufnahmegefäss 10 vorhanden sein und eine entsprechend andersartige Ausgestaltung der Matrize 3 wäre denkbar. Die zentrale Vertiefung 156 auf der Oberseite des Deckels ist zwar vorteilhaft, um Material zu sparen bzw. um eine gleichbleibende Wanddicke des Probengefässes zu gewährleisten, muss aber nicht zwingend vorhanden sein. Der von dieser Vertiefung begrenzte Raum könnte auch vollständig ausgefüllt sein, so dass der Deckel eine insgesamt ebene Oberseite aufweisen würde. Der Stempel 2 der Verschliessvorrichtung würde in diesem Fall entsprechend keinen nach unten hin vorragenden Kern aufweisen, sondern würde eine insgesamt ebene Unterseite aufweisen. Im Innenraum des Aufnahmegefässes könnten in einer alternativen Ausführungsform beispielsweise Strukturen zum Ableiten der Wärmeenergie vorhanden sein. Ebenso sind in Bezug auf den Deckel als auch auf das Aufnahmegefäss durchaus andere Materialwahlen möglich. So könnten der Deckel und das Aufnahmegefäss beispielsweise auch aus Stahl, insbesondere vergoldetem Stahl, hergestellt sein. Insbesondere in demjenigen Bereich des Aufnahmegefässes, welcher zur Verbindung mit dem Deckel dient, könnten auch Strukturen, wie zum Beispiel Rillen oder ein speziell aufgerauter Oberflächenbereich, vorhanden sein, welche die Verbindung zwischen Aufnahmegefäss und Deckel noch weiter verbessern.

**BEZUGSZEICHENLISTE**

| | | | |
|---|---|---|---|
| 1 | Tiegel | 156 | Vertiefung |
| 10 | Aufnahmegefäss | 157 | Boden |
| 101 | Boden | 158 | Dichtfläche |
| 102 | Seitenwand | 2 | Stempel |
| 103 | Wulst | 20 | Kern |
| 104 | Innenraum | 25 | Mantel |
| 105 | Dichtfläche | 251 | Anschlagsfläche |
| 15 | Deckel | 252 | Befestigungsöffnung |
| 151 | Deckfläche | 3 | Matrize |
| 152 | Seitenwand | 31 | Vertiefung |
| 153 | Auflagefläche | 32 | Innenwand |
| 154 | Mantel | 33 | Boden |
| 155 | Aufnahmeraum | 34 | Abgeschrägte Kante |

## Patentansprüche

1. Hochdrucktiegel (1) für kalorimetrische Messungen, aufweisend
ein Aufnahmegefäss (10), welches einen Boden (101) aufweist, eine Seitenwand (102), die sich umlaufend vom Boden (101) aus entlang einer Längsachse bis zu einer Oberkante hin erstreckt, sowie einen durch die Seitenwand (102) und den Boden (101) begrenzten Innenraum (104), der zur Aufnahme einer Probe dient; sowie
einen Deckel (15) mit einer Deckfläche (151), der dazu ausgebildet ist, den Innenraum (104) in einem verschlossenen Zustand des Hochdrucktiegels (1) luftdicht nach aussen hin zu verschliessen;
**dadurch gekennzeichnet, dass**
der Deckel (15) einen Randbereich (152, 153, 154) aufweist, welcher im Querschnitt U-förmig ausgebildet ist und dadurch einen Aufnahmeraum (155) für eine Aufnahme der Oberkante des Aufnahmegefässes (10) bildet, so dass die Oberkante des Aufnahmegefässes (10) beim Verschliessen des Hochdrucktiegels (1) derart im U-förmigen Randbereich (152, 153, 154) eingeklemmt bzw. eingepresst werden kann, dass eine Dichtfläche zwischen dem Deckel (15) und dem Aufnahmegefäss (10) entsteht, die sich im Bereich der Oberkante des Aufnahmegefässes (10) sowohl über eine Innen- als auch eine Aussenseite der Seitenwand (102) des Aufnahmegefässes (1) erstreckt, und dass die Deckfläche (151) im verschlossenen Zustand des Hochdrucktiegels (1) innerhalb des Innenraums (104) des Aufnahmegefässes (10) angeordnet ist.

2. Hochdrucktiegel (1) gemäss Anspruch 1, wobei der im Querschnitt U-förmige Randbereich (152, 153, 154) des Deckels (15) umlaufend ausgebildet ist.

3. Hochdrucktiegel (1) gemäss einem der vorhergehenden Ansprüche, wobei der Aufnahmeraum (155) in eine im Wesentlichen parallel zur Längsachse weisende Richtung offen ausgebildet ist.

4. Hochdrucktiegel (1) gemäss einem der vorhergehenden Ansprüche, wobei der im Querschnitt U-förmige Randbereich des Deckels (15) dadurch ausgebildet ist, dass der Deckel (15) eine sich im Wesentlichen senkrecht von der Deckfläche (151) nach oben hin erstreckende Seitenwand (152), eine sich von dieser Seitenwand (152) des Deckels (15) im Wesentlichen senkrecht nach aussen hin erstreckende Auflagefläche (153), sowie einen sich von dieser Auflagefläche (153) im Wesentlichen senkrecht nach unten hin erstreckenden Mantel (154) aufweist.

5. Hochdrucktiegel (1) gemäss Anspruch 4, wobei sich der Mantel (154) in Richtung der Längsachse im Wesentlichen bis zur Deckfläche (151) nach unten hin erstreckt.

6. Hochdrucktiegel (1) gemäss einem der vorhergehenden Ansprüche, wobei das Aufnahmegefäss (10) im Bereich der Oberkante einen umlaufenden, nach aussen hin vorstehenden Wulst (103) aufweist.

7. Hochdrucktiegel (1) gemäss Anspruch 6, wobei der Aufnahmeraum (155) des Deckels (15) derart ausgebildet ist, dass er im verschlossenen Zustand des Hochdrucktiegels (1) den Wulst (103) im Bereich der Oberkante des Aufnahmegefässes (10) vollständig aufnimmt, und dass sich der Deckel (15) dabei auf der Aussenseite des Wulstes (103) entlang der Längsachse in Richtung des Bodens (101) des Aufnahmegefässes (10) über den Wulst (103) hinaus erstreckt.

8. Hochdrucktiegel (1) gemäss einem der Ansprüche 6 oder 7, wobei der Wulst (103) eine Unterseite aufweist, welche sich umlaufend von der Seitenwand (102) des Aufnahmegefässes (10) entlang einer Richtung nach aussen hin erstreckt, die relativ zu einer senkrecht auf der Längsachse stehenden Richtung geneigt ist.

9. Hochdrucktiegel (1) gemäss einem der vorhergehenden Ansprüche, wobei die Seitenwand (102) des Aufnahmegefässes (10) eine zum Innenraum (104) hin weisende Innenfläche aufweist, die vollständig plan ausgebildet ist.

10. Hochdrucktiegel (1) gemäss einem der vorhergehenden Ansprüche, wobei das Aufnahmegefäss (10) und der Deckel (15) jeweils aus Aluminium oder Titan hergestellt sind.

11. Vorrichtung zum Verschliessen eines Hochdrucktiegels (1) für kalorimetrische Messungen, welcher gemäss einem der Ansprüche 1 bis 10 ausgebildet ist, und welcher ein Aufnahmegefäss (10) mit einem Innenraum (104) zur Aufnahme einer Probe sowie einen Deckel (15) zum luftdichten Verschliessen dieses Innenraums (104) aufweist, die Vorrichtung aufweisend
einen Stempel (2) mit einer Anschlagsfläche (251) zum Aufpressen des Deckels (15) entlang einer Aufpressrichtung auf das Aufnahmegefäss (10), um den Innenraum (104) des Aufnahmegefässes (10) luftdicht nach aussen hin zu verschliessen;
eine Matrize (3) mit einer über eine Eingangsöffnung zugänglichen Vertiefung (31), um das Aufnahmegefäss (10) für das Aufpressen des Deckels (15) darin aufzunehmen;
**dadurch gekennzeichnet, dass**
die Matrize (3) eine relativ zur Aufpressrichtung abgeschrägte Kante (34) aufweist, welche die Eingangsöffnung der Vertiefung (31) seitlich begrenzt, um einen in Bezug auf das Aufnahmegefäss (10) aussenseitig angeordneten Bereich (154) des Deckels (15) beim Aufpressen nach innen zum Aufnahmegefäss (10) hin zu drücken, so dass eine luftdichte Verbindung zwischen Deckel und Aufnahmegefäss entsteht.

12. Vorrichtung gemäss Anspruch 11, wobei die abgeschrägte Kante (34) umlaufend ausgebildet ist und insbesondere einen Winkel von ungefähr 45° relativ zur Aufpressrichtung aufweist.

13. Vorrichtung gemäss einem der Ansprüche 11 bis 12, wobei der Stempel (2) einen Kern (20) aufweist, welcher gegenüber der Anschlagsfläche (251) in Richtung zur Matrize nach aussen hin vorragt, um eine an die Aussenseite des Deckels (15) angepasste Aussenform des Stempels (2) auszubilden.

14. Vorrichtung gemäss Anspruch 13, wobei der nach aussen hin vorragende Kern (20) umlaufend von der Anschlagsfläche (251) umgeben ist.

15. Verfahren zum Verschliessen eines Hochdrucktiegels (1) für kalorimetrische Messungen, welcher gemäss einem der Ansprüche 1 bis 10 ausgebildet ist, und welcher ein Aufnahmegefäss (10) mit einem Innenraum (104) zur Aufnahme einer Probe sowie einen Deckel (15) zum luftdichten Verschliessen dieses Innenraums (104) aufweist, aufweisend die folgenden Verfahrensschritte:
- Bereitstellen einer Vorrichtung aufweisend einen Stempel (2) und eine Matrize (3) mit einer Vertiefung (31) und einer abgeschrägten Kante (34) gemäss einem der Ansprüche 11 bis 14;
- Platzieren des Aufnahmegefässes (10) in der Vertiefung (31) der Matrize (3);
- Platzieren des Deckels (15) zwischen dem Aufnahmegefäss (10) und dem Stempel (2); sowie
- Aufpressen des Deckels (15) auf das Aufnahmegefäss (19) mittels Annäherung des Stempels (2) und der Matrize (3) relativ zueinander, wobei die abgeschrägte Kante (34) der Matrize (3) beim Aufpressen einen in Bezug auf das Aufnahmegefäss (19) aussenseitig angeordneten Bereich des Deckels (15) nach innen gegen das Aufnahmegefäss (10) drückt.

## Claims

1. High-pressure crucible for calorimetric measurements, having
- a receiving vessel (10), which has a base (101), a side wall (102) which extends in an encircling manner from the base (101) along a longitudinal axis up to an upper edge, and an interior space (104) which is delimited by the side wall (102) and the base (101) and which serves for receiving a specimen; and
- a cover (15) having a cover face (151), which is formed for closing the interior space (104) in an air-tight manner in relation to the outside in a closed state of the high-pressure crucible (1);
**characterized in that**
the cover (15) has a peripheral region (152, 153, 154) which is formed as U-shaped in cross section and on account of this forms a receiving space (155) for receiving the upper edge of the receiving vessel (10), such that, upon closing the high-pressure crucible (1), the upper edge of the receiving vessel (10) can be clamped or pressed into the U-shaped peripheral region (152, 153, 154) in such a manner that a sealing face is created between the cover (15) and the receiving vessel (10), said sealing face extending in the region of the upper edge of the receiving vessel (10) over both an inner side and an outer side of the side wall (102) of the receiving vessel (1), and **in that** the cover face (151) in the closed state of the high-pressure crucible (1) is located within the interior space (104) of the receiving vessel (10).

2. High-pressure crucible (1) according to Claim 1, wherein the peripheral region (152, 153, 154) having a U-shaped cross section of the cover (15) is formed in an encircling manner.

3. High-pressure crucible (1) according to one of the preceding claims, wherein the receiving space (155) is formed to be open in a direction which is substantially parallel to the longitudinal axis.

4. High-pressure crucible (1) according to one of the preceding claims, wherein the peripheral region having a U-shaped cross section of the cover (15) is formed such that the cover (15) has a side wall (152) which extends substantially perpendicularly upwards from the cover surface (151), a bearing face (153) which extends substantially perpendicularly outwards from said side wall (152) of the cover (15), and a sleeve (154) which extends substantially perpendicularly downwards from said bearing face (153).

5. High-pressure crucible (1) according to Claim 4, wherein the sleeve (154) extends downwards in the direction of the longitudinal axis substantially as far as the cover face (151).

6. High-pressure crucible (1) according to one of the preceding claims, wherein the receiving vessel (10) has in the region of the upper edge an encircling, outwardly projecting bead (103).

7. High-pressure crucible (1) according to Claim 6, wherein the receiving space (155) of the cover (15) is formed in such a manner that it completely receives the bead (103) in the region of the upper edge of the receiving vessel (10) in the closed state of the high-pressure crucible (1), and in that the cover (15) here extends beyond the bead (103) on the outer side of the bead (103) along the longitudinal axis in the direction of the base (101) of the receiving vessel (10).

8. High-pressure crucible (1) according to either of Claims 6 and 7, wherein the bead (103) has a lower side which extends in an encircling manner from the side wall (102) of the receiving vessel (10) along an outward direction which is inclined in relation to a direction which is perpendicular to the longitudinal axis.

9. High-pressure crucible (1) according to one of the preceding claims, wherein the side wall (102) of the receiving vessel (10) has an inner face which faces towards the inner space (104) and is formed as completely planar.

10. High-pressure crucible (1) according to one of the preceding claims, wherein the receiving vessel (10) and the cover (15) are in each case manufactured from aluminium or titanium.

11. Device for closing a high-pressure crucible (1) for calorimetric measurements which is formed according to one of Claims 1 to 10 and which has a receiving vessel (10) with an interior space (104) for receiving a specimen and a cover (15) for the air-tight closure of said interior space (104), the device having
- a ram (2) having a stop face (251) for pressing the cover (15) along a pressing direction onto the receiving vessel (10) in order to close the interior space (104) of the receiving vessel (10) in an air-tight manner in relation to the outside;
- a die (3) having a depression (31) for receiving the receiving vessel (10) therein for the pressing of the cover (15), said depression (31) being accessible via an entry opening;
**characterized in that**
the die (3) has an edge (34) which is bevelled in relation to direction of pressing and which laterally delimits the entry opening of the depression (31) in order to push a region (154) of the cover (15) located on the outside in relation to the receiving vessel (10) inwards towards the receiving vessel (10) during pressing, such that an air-tight connection between the cover and the receiving vessel is created.

12. Device according to Claim 11, wherein the bevelled edge (34) is configured in an encircling manner and in particular has an angle of around 45° in relation to the direction of pressing.

13. Device according to either of Claims 11 and 12, wherein the ram (2) has a core (20) which in relation to the stop face (251) projects outwardly in the direction of the die in order to form an external shape of the ram (2) which is adapted to the outer side of the cover (15).

14. Device according to Claim 13, wherein the outwardly projecting core (20) is surrounded in an encircling manner by the stop face (251).

15. Method for closing a high-pressure crucible (1) for calorimetric measurements which is configured according to one of Claims 1 to 10 and which has a receiving vessel (10) with an interior space (104) for receiving a specimen and a cover (15) for the air-tight closure of said interior space (104), having the following method steps:
- providing a device having a ram (2) and a die (3) with a depression (31) and a bevelled edge (34) according to one of Claims 11 to 14;
- placing the receiving vessel (10) in the depression (31) of the die (3);
- placing the cover (15) between the receiving vessel (10) and the ram (2); and
- pressing the cover (15) onto the receiving vessel (19) by means of the ram (2) and the die (3) approaching one another, wherein the bevelled edge (34) of the die (3) during pressing pushes a region of the cover (15) located on the outside in relation to the receiving vessel inwards against the receiving vessel (10).

## Revendications

1. Creuset (1) à haute pression pour mesures calorimétriques, présentant :
un récipient de réception (10) doté d'un fond (101), d'une paroi latérale (102) qui entoure le fond (101) et s'étend jusqu'à un bord supérieur suivant un axe longitudinal et d'un espace intérieur (104) délimité par la paroi latérale (102) et le fond (101) et servant à reprendre un échantillon,
un couvercle (15) doté d'une surface de couvercle (151) configurée pour fermer de manière étanche à l'air l'espace intérieur (104) vis-à-vis de l'extérieur lorsque le creuset (1) à haute pression est fermé, **caractérisé en ce que**
le couvercle (15) présente une bordure (152, 153, 154) présentant la forme d'un U en coupe transversale et formant ainsi un espace de reprise (155) qui reprend le bord supérieur du récipient de réception (10), de telle sorte que lorsque le creuset (1) à haute pression est fermé, le bord supérieur du récipient de réception (10) puisse être serré ou repoussé dans la bordure (152, 153, 154) en forme de U, de manière à former entre le couvercle (15) et le récipient de réception (10) une surface d'étanchéité qui s'étend à la fois au niveau du bord supérieur du récipient de réception (10) et sur le côté intérieur et le côté extérieur de la paroi latérale (102) du récipient de réception (10) et que la surface d'étanchéité (151) soit située à l'intérieur (104) du récipient de réception (10) lorsque le creuset (1) à haute pression est fermé.

2. Creuset (1) à haute pression selon la revendication 1, dont la bordure (152, 153, 154) présentant la forme d'un U en coupe transversale est configurée de manière à entourer le couvercle (15).

3. Creuset (1) à haute pression selon l'une des revendications précédentes, dont l'espace de reprise (155) est ouvert dans une direction essentiellement parallèle à l'axe longitudinal.

4. Creuset (1) à haute pression selon l'une des revendications précédentes, dont la bordure du couvercle (15) présentant la forme d'un U en coupe transversale est configurée de telle sorte que le couvercle (15) présente une paroi latérale (152) qui s'étend vers le haut essentiellement à la perpendiculaire de la surface (151) du couvercle, une surface de pose (153) qui s'étend vers l'extérieur, essentiellement à la perpendiculaire de cette paroi latérale (152) du couvercle (15) ainsi qu'une enveloppe (154) qui s'étend vers le bas, essentiellement à la perpendiculaire de cette surface de pose (153).

5. Creuset (1) à haute pression selon la revendication 4, dans lequel l'enveloppe (154) s'étend vers le bas dans la direction de l'axe longitudinal, essentiellement jusqu'à la surface (151) du couvercle.

6. Creuset (1) à haute pression selon l'une des revendications précédentes, dont le récipient de réception (10) présente au niveau du bord supérieur un bourrelet périphérique (103) qui déborde vers l'extérieur.

7. Creuset (1) à haute pression selon la revendication 6, dans lequel l'espace de réception (155) du couvercle (15) est configuré de manière à reprendre complètement le bourrelet (103) au niveau du bord supérieur du récipient de réception (10) et que lorsque le creuset (1) à haute pression est fermé, le couvercle (15) s'étende alors sur le côté extérieur du bourrelet (103), au-delà du bourrelet (103), le long de l'axe longitudinal et en direction du fond (101) du récipient de réception (10).

8. Creuset (1) à haute pression selon l'une des revendications 6 ou 7, dans lequel le bourrelet (103) présente un côté inférieur qui entoure la paroi latérale (102) du récipient de réception (10) et qui s'étend vers l'extérieur dans une direction inclinée par rapport à une direction perpendiculaire à l'axe longitudinal.

9. Creuset (1) à haute pression selon l'une des revendications précédentes, dans lequel la paroi latérale (102) du récipient de réception (10) présente une surface intérieure orientée vers l'espace intérieur (104) et entièrement plane.

10. Creuset (1) à haute pression selon l'une des revendications précédentes, dans lequel le récipient de réception (10) et le couvercle (15) sont tous deux réalisés en aluminium ou en titane.

11. Dispositif de fermeture d'un creuset (1) à haute pression pour mesures calorimétriques configuré selon l'une des revendications 1 à 10 et présentant un récipient de réception (10) doté d'un espace intérieur (104) servant à reprendre un échantillon ainsi que d'un couvercle (15) qui ferme de manière étanche à l'air cet espace intérieur (104) du récipient de réception (10), le dispositif présentant :
un poussoir (2) doté d'une surface de butée (251) et repoussant le couvercle (15) dans une direction de poussée sur le récipient de réception (10) pour fermer de manière étanche à l'air l'espace intérieur (104) du récipient de réception (10) vis-à-vis de l'extérieur,
une matrice (3) dotée d'un creux (31) accessible par l'intermédiaire d'une ouverture d'entrée et servant à reprendre le récipient de réception (10) pour pouvoir y repousser le couvercle (15),
**caractérisé en ce que**
la matrice (3) présente un chant (34) oblique par rapport à la direction de poussée et qui délimite latéralement l'ouverture d'entrée du creux (31) pour repousser vers l'intérieur sur le récipient de réception (10) une partie (154) du couvercle (15) disposée à l'extérieur du récipient de réception (10), de manière à établir une liaison étanche à l'air entre le couvercle et le récipient de réception.

12. Dispositif selon la revendication 11, dont le chant oblique (34) est périphérique et présente en particulier un angle d'environ 45° par rapport à la direction de poussée.

13. Dispositif selon l'une des revendications 11 et 12, dont le poussoir (2) présente une âme (20) qui déborde vers l'extérieur par rapport à la surface de butée (251) en direction de la matrice pour donner au poussoir (2) une forme extérieure adaptée au côté extérieur du couvercle (15).

14. Dispositif selon la revendication 13, dont l'âme (20) débordant vers l'extérieur est entourée par la surface de butée (251).

15. Procédé de fermeture d'un de fermeture d'un creuset (1) à haute pression pour mesures calorimétriques configuré selon l'une des revendications 1 à 10 et présentant un récipient de réception (10) doté d'un espace intérieur (104) servant à reprendre un échantillon ainsi que d'un couvercle (15) qui ferme de manière étanche à l'air cet espace intérieur (104) du récipient de réception (10), le procédé présentant les étapes qui consistent à :
prévoir un dispositif présentant un poussoir (2) et une matrice (3) dotée d'un creux (31) et d'un chant oblique (34) selon l'une des revendications 11 à 14,
placer le récipient de réception (10) dans le creux (31) de la matrice (3),
placer le couvercle (15) entre le récipient de réception (10) et le poussoir (2) et
repousser le couvercle (15) sur le récipient de réception (19) en approchant l'un de l'autre le poussoir (2) et la matrice (3), tandis que lors de la poussée, le chant oblique (34) de la matrice (3) repousse vers l'intérieur contre le récipient de réception (10) une partie du couvercle (15) disposée à l'extérieur par rapport au récipient de réception (19).
